# EUROPÄISCHE PATENTSCHRIFT

(11) **EP 2 797 137 B1**
(45) Veröffentlichungstag und Bekanntmachung des Hinweises auf die Patenterteilung: **20.04.2016**
(21) Anmeldenummer: 14155775.1
(22) Anmeldetag: 19.02.2014
(51) Int. Cl.: H01M 2/10, H01M 10/04, H01M 10/6556, H01M 10/48, H01M 2/20

(54) **Batteriesystem**
Battery system
Système de batterie

(30) Priorität: 25.04.2013 DE 102013207592
(43) Veröffentlichungstag der Anmeldung: 29.10.2014
(73) Patentinhaber: Samsung SDI Co., Ltd., Yongin-si, Gyeonggi-do (KR)
(72) Erfinder: Fister, Kevin, 8020 Graz (AT); Rath, Helmut, 8481 Weinburg a. S. (AT)
(74) Vertreter: Gulde & Partner

(56) Entgegenhaltungen:
- EP-A1- 2 390 941
- EP-A2- 2 343 752
- CN-Y- 2 674 657
- US-A1- 2010 215 998

## Beschreibung

Die vorliegende Erfindung betrifft ein Batteriesystem, umfassend zumindest ein erstes und ein zweites Batteriemodul, wobei jedes Batteriemodul durch eine Grundplatte und einen auf einer Grundfläche der Grundplatte befestigten Zellenstapel gebildet ist, und zumindest einen Hilfsrahmen, wobei an einer ersten Seite der Grundplatte ein erster Absatz und an einer der ersten Seite gegenüberliegenden zweiten Seite ein erster Abschnitt angeordnet ist.

Derartige Batteriesysteme werden vor Allem als Energiespeicher in Kraftfahrzeugen eingesetzt, beispielsweise für den Antrieb von Elektro- und Hybridfahrzeugen.

Bei den genannten Anwendungen ist es erwünscht, dass die äußeren Abmessungen des Batteriesystems möglichst kompakt sind. Zudem soll das Batteriesystem eine hohe Steifigkeit aufweisen, um bei einem Unfall des Kraftfahrzeugs oder bei einer Fehlbelastung während der Montage des Batteriesystems im Kraftfahrzeug nicht beschädigt zu werden. Diese Anforderungen stehen jedoch im Widerspruch zu einer guten Zugänglichkeit der einzelnen Komponenten des Batteriesystems während deren Montage. Dafür wären großzügige Freiräume zwischen den einzelnen Komponenten vorteilhaft.

Die Offenlegung US 2012/0121959 A1 beschreibt eine Batterie-Einheit für ein Fahrzeug, mit einer Bodenfläche im Batteriekörper die dazu eingerichtet ist Batteriemodule zu halten, und mit einem Hohlrahmen der entlang der Bodenfläche angeordnet ist. An den längsseitigen Endflächen der Batteriemodule ragen Bügel hervor, an denen die Batteriemodule am Hohlrahmen befestigt werden.

Aus der CN 2 674 657 Y ist eine erweiterbare Haltevorrichtung zum Laden von Batteriezellen bekannt, mit einer Grundplatte und seitlich angeschraubten Abdeckplatten.

Es ist eine Aufgabe der Erfindung, Batteriesysteme der genannten Art so zu verbessern, dass die Zugänglichkeit während der Montage des Batteriesystems erleichtert wird, und insbesondere ein Batteriesystem anzugeben welches sich durch kompakte Außenabmessungen und hohe Steifigkeit auszeichnet.

Die Lösung der Aufgabe erfolgt durch ein Batteriesystem, umfassend die in Anspruch 1 genannten Merkmale.

Erfindungsgemäß wird durch die Verbindung der Batteriemodule durch Verschraubung mit dem zumindest einen Hilfsrahmen ein fester Verbund von Batteriemodulen geschaffen. Die Grundplatte mit dem ersten Absatz und dem ersten Abschnitt kann dabei so steif ausgeführt werden, dass nach erfolgter Verschraubung der Verbund als Ganzes handhabbar ist. Der Verbund kann beispielsweise als Ganzes von einer Montagestation zur nächsten gehoben werden. Dabei sind die Schnittstellen der Module noch gut zugänglich, beispielsweise für den Anschluss von Kühlmittelleitungen, oder der elektrischen Verbindung zwischen benachbarten Batteriemodulen. Der zumindest eine Hilfsrahmen kann dabei als verprägtes Blechteil ausgeführt sein. Dadurch erhöhen sich die Außenabmessungen des Verbunds in Relation zu den einzelnen Batteriemodulen nur unwesentlich. Besonders vorteilhaft ist es, wenn ein erster Hilfsrahmen an einer ersten Stirnseite der Batteriemodule angeordnet ist, und ein zweiter Hilfsrahmen an einer zweiten, der ersten Seite gegenüberliegenden Stirnseite der Batteriemodule angeordnet ist. Dergestalt wird der Verbund noch steifer, da die Batteriemodule an zwei Enden durch die Hilfsrahmen verbunden sind.

Erfindungsgemäß ist eine Unterkante des ersten Absatzes des zweiten Batteriemoduls in Einbaulage des Batteriesystems oberhalb einer Oberkante des ersten Abschnitts des ersten Batteriemoduls angeordnet, sodass das erste Batteriemodul entlang dessen erstem Abschnitt eng an den ersten Absatz des zweites Batteriemoduls anordenbar ist. Dadurch werden die Abmessungen des Verbunds weiter reduziert, da zwischen benachbarten Batteriemodulen lediglich eine einzige Absatzbreite, beziehungsweise eine einzige Abschnittsbreite liegt.

Weiterbildungen der Erfindung sind in den abhängigen Ansprüchen, der Beschreibung sowie den beigefügten Zeichnungen angegeben.

Gemäß einer Ausgestaltung der Erfindung umfasst das Batteriesystem ein Gehäuse mit einer Gehäuseschale und einem Gehäusedeckel, wobei im ersten Absatz zweite Gewindebohrungen vertikal zur Grundfläche und im ersten Abschnitt zweite Durchgangslöcher vertikal zur Grundfläche angeordnet sind, wobei die Batteriemodule durch Verschraubung durch Durchgangslöcher in der Gehäuseschale und durch die zweiten Durchgangslöcher im ersten Abschnitt in die zweiten Gewindebohrungen im ersten Absatz mit der Gehäuseschale verbunden sind. Durch diese Ausgestaltung sind zur Befestigung des Verbunds in der Gehäuseschale keine zusätzlichen Rahmenelemente erforderlich. Zusätzlich kann die Gehäuseschale dünnwandig ausgeführt werden, beispielsweise als Blech-Tiefzieh-Teil, da der Verbund von Grundplatten und Hilfsrahmen bereits eine hohe Steifigkeit aufweist. Die Gehäuseschale dient dadurch hauptsächlich zum Schutz des Batteriesystems vor äußeren Einflüssen, und trägt nur geringfügig zur Steifigkeit des Batteriesystems bei.

Ist entlang dem ersten Abschnitt eines Batteriemoduls kein weiteres Batteriemodul angeordnet, so weist der erste Abschnitt anstatt den zweiten Durchgangslöchern zweite Gewindebohrungen auf.

Vorzugsweise weist jedes Batteriemodul eine Deckkappe auf, wobei an einer ersten Seite der Deckkappe ein dritter Absatz und an einer der ersten Seite der Deckkappe gegenüberliegenden zweiten Seite ein zweiter Abschnitt angeordnet ist. Die Deckkappe beherbergt und hält beispielsweise Zellverbinder, durch die Pole von im Zellenstapel benachbarten Zellen miteinander verbunden sind, Zellspannungsabgriffe und damit verbundene Messleitungen, oder auch Temperatursensoren. Bei einer geeignet hohen Eigensteifigkeit dieser Deckkappen können im dritten Absatz und im zweiten Abschnitt parallel zur Erstreckungsrichtung des dritten Absatzes und des zweiten Abschnitts dritte Gewindebohrungen angeordnet werden, wobei die Batteriemodule durch Verschraubung durch im Hilfsrahmen angeordnete Durchgangslöcher in die dritten Gewindebohrungen über den Hilfsrahmen miteinander verbunden sind. Dies erhöht die Steifigkeit des Verbunds zusätzlich. Ähnlich zur Ausgestaltung von erstem Absatz und erstem Abschnitt kann eine Unterkante des dritten Absatzes des zweiten Batteriemoduls in Einbaulage des Batteriesystems oberhalb einer Oberkante des zweiten Abschnittes des ersten Batteriemoduls angeordnet sein. Die Deckkappe kann beispielsweise mittels Schrauben mit in der Grundplatte vorgesehenen Verbindungs-Gewindebohrungen mit der Grundplatte verbunden sein. Die Deckkappe weist dazu entsprechende Durchgangslöcher auf. Alternativ dazu können die Verbindungs-Gewindebohrungen auch in der Deckkappe angeordnet sein, und die Durchgangslöcher in der Deckkappe.

Gemäß einer weiteren Ausgestaltung der Erfindung weist der dritte Absatz vierte Durchgangslöcher und der zweite Abschnitt vierte Gewindebohrungen auf. Die vierten Durchgangslöcher im dritten Absatz eines ersten Batteriemoduls sind mit den vierten Gewindebohrungen im zweiten Abschnitt eines zweiten, zum ersten Batteriemodul benachbarten Batteriemoduls deckungsgleich. Dadurch führen Verschraubungen durch Durchgangslöcher des Gehäusedeckels durch die Durchgangslöcher im dritten Absatz des zweiten Batteriemoduls in die Gewindebohrungen im zweiten Abschnitt des ersten Batteriemoduls. Derart werden Flächen des dritten Absatzes des zweiten Batteriemoduls mit Flächen des zweiten Abschnittes des ersten Batteriemoduls verpresst. Dies bewirkt eine verbesserte Steifigkeit des Verbunds von erstem und zweitem Batteriemodul.

Ist entlang dem dritten Absatz eines Batteriemoduls kein weiteres Batteriemodul angeordnet, so weist der dritte Absatz anstatt den vierten Durchgangslöchern vierte Gewindebohrungen auf.

Gemäß einer Ausführungsform der Erfindung weist die Grundplatte jedes Batteriemoduls einen ersten Steg auf, der sich vom ersten Absatz vertikal zur Grundfläche der Grundplatte erstreckt. Diese Ausführungsform ist insbesondere dann vorteilhaft wenn die Deckkappe keinen dritten Absatz und keinen zweiten Abschnitt aufweist. Der erste Steg weist fünfte Gewindebohrungen parallel zur Erstreckungsrichtung des ersten Stegs auf, wobei die Batteriemodule durch Verschraubung durch Durchgangslöcher des Gehäusedeckels in die fünften Gewindebohrungen mit dem Gehäusedeckel verbunden sind. Die fünften Gewindebohrungen ersetzen in dieser Ausführungsform die vierten Gewindebohrungen. Der erste Steg kann auch sechste Gewindebohrungen parallel zur Erstreckungsrichtung des ersten Absatzes und des ersten Abschnitts aufweisen, wobei die Batteriemodule durch Verschraubung durch Durchgangslöcher des Hilfsrahmens in die sechsten Gewindebohrungen über den Hilfsrahmen miteinander verbunden sind. Die sechsten Gewindebohrungen ersetzen in dieser Ausführungsform die dritten Gewindebohrungen. Diese Ausführungsform weist den Vorteil auf, dass lediglich die Grundplatte die zur Verbindung mit Hilfsrahmen und Gehäuseschale/Gehäusedeckel erforderliche Steifigkeit aufweisen muss. Die Deckkappe muss in diesem Fall lediglich die erforderliche Eigensteifigkeit zum Halten der Zellverbinder, Zellspannungsabgriffe, Messleitungen, und Temperatursensoren aufweisen. Durch diese funktionale Trennung kann das Gewicht des Batteriesystems reduziert werden.

Vorzugsweise weist die Grundplatte jedes Batteriemoduls einen zweiten Steg auf, der sich vom ersten Abschnitt vertikal zur Grundfläche der Grundplatte erstreckt. Der zweite Steg weist eine geringere Breite und eine geringere Höhe auf als der erste Steg. Der zweite Steg dient zur Verlängerung der Luftstrecke und Kriechstrecke zwischen zwei benachbarten Batteriemodulen. Bei Verschraubung durch die Durchgangslöcher in der Gehäuseschale durch die zweiten Durchgangslöcher in die zweiten Gewindebohrungen kommt es zu einer Flächenpressung zwischen einer Fläche des ersten Absatzes des zweiten Batteriemoduls und einer Fläche des ersten Abschnittes des ersten Batteriemoduls. Um die Sicherheit der Verschraubung zu gewährleisten sollten die beteiligten Flächen möglichst eben sein und keine Beschichtung aufweisen. Daher sind elektrische Isolationsmaßnahmen, wie beispielsweise eine elektrisch isolierende Lackbeschichtung dieser Flächen ungünstig. Zwischen den elektrisch leitfähigen Zellgehäusen der im Zellenstapel befindlichen Zellen und den Absätzen kann eine Differenzspannung entstehen. Ist die Grundplatte metallisch, und damit elektrisch leitfähig, kann zwischen einem Zellgehäuse und dem ersten Absatz oder dem ersten Abschnitt ein Kriechstrom, oder sogar ein Lichtbogen entstehen. Durch Ausbildung des zweiten Stegs kann die Luftstrecke und Kriechstrecke zwischen Zellgehäuse und erstem Absatz oder erstem Abschnitt hinreichend erhöht werden. Die dem Zellenstapel des Batteriemoduls zugewandte Seite des zweiten Stegs ist vorzugsweise mit einer elektrisch isolierenden Beschichtung versehen. Ebenso kann die dem Zellenstapel des Batteriemoduls zugewandte Seite des ersten Stegs mit einer elektrisch isolierenden Beschichtung versehen sein.

Gemäß einer weiteren Ausgestaltung der Erfindung weist die dem Zellenstapel des Batteriemoduls abgewandte Seite des ersten Stegs eine Ausnehmung auf. Diese Ausnehmung ist im zweiten Batteriemodul zur Aufnahme des zweiten Stegs des ersten Batteriemoduls ausgebildet. Durch diese Ausnehmung können die Batteriemodule möglichst eng aneinander angeordnet werden.

Gemäß einer Ausführungsform der Erfindung ist die Grundplatte als Kühlkörper mit innenliegenden Kühlkanälen ausgebildet. Wird die Grundplatte im Aluminium-Strangpress-Verfahren hergestellt, so können in Pressrichtung auf einfache Weise Hohlprofile gebildet werden die als Kühlkanäle dienen. Die derart gebildete Grundplatte zeichnet sich somit durch eine hohe Steifigkeit, geringes Gewicht, eine gute Wärmeleitfähigkeit und eine hohe Integrationsdichte aus.

Vorzugsweise ist der Zellenstapel jedes Batteriemoduls mit der Grundfläche der dem Zellenstapel zugeordneten Grundplatte verklebt. Dergestalt wird eine besonders einfache Anbindung des Zellenstapels an der Grundplatte erreicht, insbesondere da keine gesonderten Befestigungsmittel wie Niederhalter, Spannbügel oder Spannbänder erforderlich sind.

Gemäß einer weiteren Ausgestaltung der Erfindung umfasst ein Batteriemodul, entlang dessen erstem Abschnitt kein anderes Batteriemodul angeordnet ist, ein Zusatzelement, wobei das Zusatzelement siebte Gewindebohrungen umfasst. Diese Ausgestaltung ist insbesondere vorteilhaft wenn die Deckkappe keine dritten oder vierten Gewindebohrungen aufweist, und wenn die Grundplatte einen ersten Steg aufweist, der sich vom ersten Absatz vertikal zur Grundfläche der Grundplatte erstreckt. In diesem Fall ist ein Batteriemodul, entlang dessen erstem Abschnitt kein anderes Batteriemodul angeordnet ist, nur durch dessen ersten Absatz mit dem benachbarten Batteriemodul verbunden. Ein derart gebildeter Verbund würde nur eine geringe Steifigkeit aufweisen. Das Zusatzelement ist durch die siebten Gewindebohrungen mit dem ersten Hilfsrahmen und dem zweiten Hilfsrahmen verschraubt. Dadurch ist dieses äußerste Batteriemodul auch auf der Seite seiner Grundplatte, an der der erste Abschnitt angeordnet ist, steif im Verbund aufgenommen. Dies erhöht die Steifigkeit des gesamten Verbunds.

Die Erfindung ist nicht auf Batteriesysteme mit zwei Batteriemodulen beschränkt. In gleicher Art wie das erste und zweite Batteriemodul aneinander angeordnet sind, kann das Batteriesystem um weitere Batteriemodule erweitert werden. Dergestalt kann das gesamte Batteriesystem modular aufgebaut werden, und so je nach Leistungs- und Kapazitätsanforderung angepasst werden.

Alle Gewindebohrungen können zum Teil oder gänzlich durch Gewindeeinsätze ersetzt werden, falls der Werkstoff in dem die Gewinde vorgesehen sind nicht für das Einbringen von Gewindebohrungen geeignet ist. Alternativ dazu können beispielsweise auch Schweißmuttern oder Käfigmuttern eingesetzt werden.

Die Erfindung wird im Folgenden beispielhaft unter Bezugnahme auf die Zeichnungen beschrieben.
- Fig. 1: zeigt eine schematische Ansicht eines Batteriemoduls.
- Fig. 2: zeigt eine schematische Ansicht einer Grundplatte.
- Fig. 3: zeigt eine schematische Ansicht eines Batteriemoduls mit einer Deckkappe.
- Fig. 4: zeigt eine schematische Ansicht zweier Batteriemodule.
- Fig. 5: zeigt eine schematische Ansicht zweier Batteriemodule mit Hilfsrahmen.
- Fig. 6: zeigt eine schematische Ansicht einer Gehäuseschale.
- Fig. 7: zeigt eine schematische Draufsicht auf die Gehäuseschale.
- Fig. 8: zeigt eine schematische Ansicht zweier Batteriemodule mit Hilfsrahmen in der Gehäuseschale.
- Fig. 9: zeigt eine schematische Ansicht eines Gehäuses.
- Fig. 10: zeigt eine schematische Ansicht eines Gehäusedeckels.
- Fig. 11: zeigt eine erste schematische Ansicht einer zweiten Ausführungsform der Grundplatte.
- Fig. 12: zeigt eine zweite schematische Ansicht einer zweiten Ausführungsform der Grundplatte.
- Fig. 13: zeigt eine schematische Ansicht eines Batteriemoduls mit der zweiten Ausführungsform der Grundplatte und einer Deckkappe.
- Fig. 14: zeigt eine schematische Ansicht zweier Batteriemodule mit der zweiten Ausführungsform der Grundplatte und einem Zusatzelement.
- Fig. 15: zeigt eine schematische Ansicht zweier Batteriemodule mit der zweiten Ausführungsform der Grundplatte, einem Zusatzelement und Hilfsrahmen.
- Fig. 16: zeigt eine schematische Ansicht zweier Batteriemodule mit der zweiten Ausführungsform der Grundplatte, einem Zusatzelement und Hilfsrahmen in einer Gehäuseschale.
- Fig. 17: zeigt eine schematische Ansicht eines Batteriemoduls mit einer Deckkappe und einer Grundplatte mit Kühlkanälen und einer Aussparung

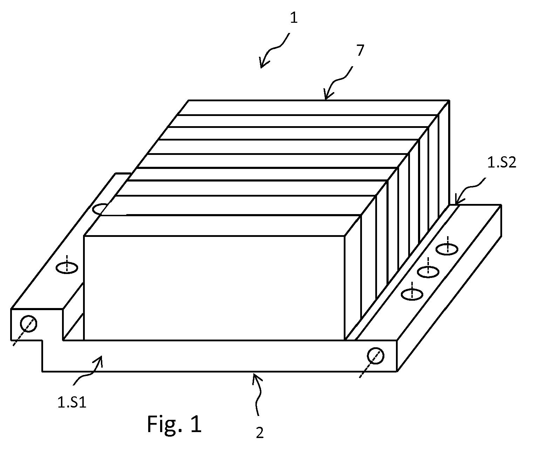

In der Fig. 1 ist ein Batteriemodul 1 schematisch dargestellt. Auf einer Grundplatte 2 ist ein Zellenstapel 7 auf geeignete Weise befestigt, beispielsweise mittels einer Klebverbindung. Das Batteriemodul 1 weist eine erste Stirnseite 1.S1 und eine der ersten Stirnseite 1.S1 gegenüberliegenden zweite Stirnseite 1.S2 auf.

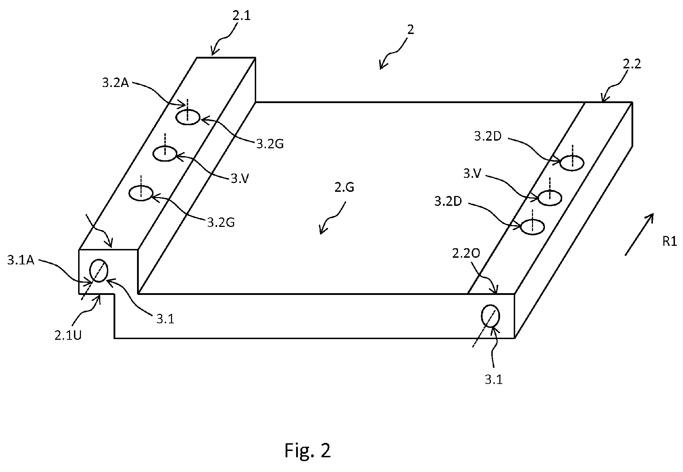

Fig. 2 zeigt eine schematische Ansicht der Grundplatte 2. Die Grundplatte 2 weist eine Grundfläche 2.G auf, auf der der Zellenstapel 7 befestigbar ist. An einer ersten Seite der Grundplatte 2 ist ein erster Absatz 2.1 angeordnet, und auf einer zweiten, der ersten Seite gegenüberliegenden Seite ein erster Abschnitt 2.2. R1 kennzeichnet die Erstreckungsrichtung sowohl des Absatzes 2.1 als auch des ersten 2.2. Die Grundfläche 2.G liegt zwischen dem ersten Absatz 2.1 und dem ersten Abschnitt 2.2. Sowohl im ersten Absatz 2.1 als auch im ersten Abschnitt 2.2 sind erste Gewindebohrungen 3.1 angeordnet. Die Achsrichtungen 3.1A der ersten Gewindebohrungen sind parallel zur Erstreckungsrichtung R1. Der erste Absatz 2.1 und der erste Abschnitt 2.2 sind bezogen auf die Grundfläche 2.G in unterschiedlicher Höhe angeordnet. Eine Unterkante 2.1 U des ersten Absatzes 2.1 ist insbesondere oberhalb einer Oberkante 2.20 des ersten Abschnittes angeordnet. Oberhalb ist in Zusammenhang mit der Einbaulage des Batteriesystems zu verstehen. In Einbaulage ist die Grundfläche 2.G horizontal ausgerichtet, und der Zellenstapel 7 weist von der Grundfläche 2.G nach oben. Im ersten Absatz 2.1 sind zweite Gewindebohrungen 3.2G angeordnet, während im ersten Abschnitt 2.2 zweite Durchgangslöcher 3.2D angeordnet sind. Die Achsrichtung 3.2A der zweiten Gewindebohrungen 3.2G und zweiten Durchgangslöcher 3.2D erstrecken sich vertikal zur Grundfläche 2.G. Zusätzlich sind im ersten Absatz 2.1 und im ersten Abschnitt 2.2 Verbindungs-Gewindebohrungen 3.V angeordnet, die zur Verbindung der Grundplatte 2.1 mit einer Deckkappe 5 dienen.

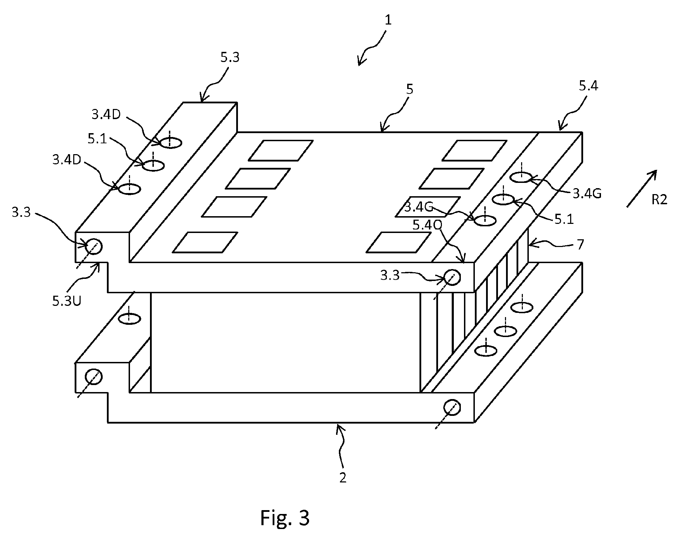

Fig. 3 zeigt eine schematische Ansicht des Batteriemoduls 1 mit der Deckkappe 5. Die Deckkappe 5 beherbergt und hält beispielsweise Zellverbinder, Messleitungen oder Temperatursensoren. Die Deckkappe 5 liegt auf dem Zellenstapel 7 auf. Die Deckkappe 5 kann auch eine Elektronikeinheit aufweisen. Der Übersichtlichkeit halber sind diese Komponenten jedoch nicht dargestellt. An einer ersten Seite der Deckkappe 5 ist ein dritter Absatz 5.3 angeordnet, und an einer zweiten, der ersten Seite gegenüberliegenden Seite der Deckkappe 5 ist ein zweiter Abschnitt 5.4 angeordnet. In der gezeigten Ausführungsform weist die Deckkappe 5 eine hohe Eigensteifigkeit auf, wodurch die Deckkappe dazu geeignet ist Kräfte zum Verbinden der Batteriemodule 1 zu übernehmen. Dazu sind im dritten Absatz 5.3 und im zweiten Abschnitt 5.4 parallel zur Erstreckungsrichtung R2 des dritten Absatzes und des zweiten Abschnitts 5.3, 5.4 dritte Gewindebohrungen 3.3 angeordnet. Der dritte Absatz 5.3 weist vierte Durchgangslöcher 3.4D auf, während der zweite Abschnitt 5.4 vierte Gewindebohrungen 3.4G aufweist. Dritter Absatz 5.3 und zweiter Abschnitt 5,4 weisen zudem Durchgangslöcher 5.1 auf. Durch jedes Durchgangsloch 5.1 kann eine Schraube 8 gesteckt werden, die in die Verbindungs-Gewindebohrungen 3.V in der Grundplatte 2 eingreift. Dadurch wird die Deckkappe 5 mit der Grundplatte 2 verbunden, und das Zellenpaket 7 zwischen Grundplatte 2 und Deckkappe 5 verspannt. Analog zur Gestaltung der Grundplatte 2 ist in Einbaulage des Batteriesystems eine Unterkante 5.3U des dritten Absatzes 5.3 oberhalb einer Oberkante 5.40 des zweiten Abschnittes 5.4 angeordnet.

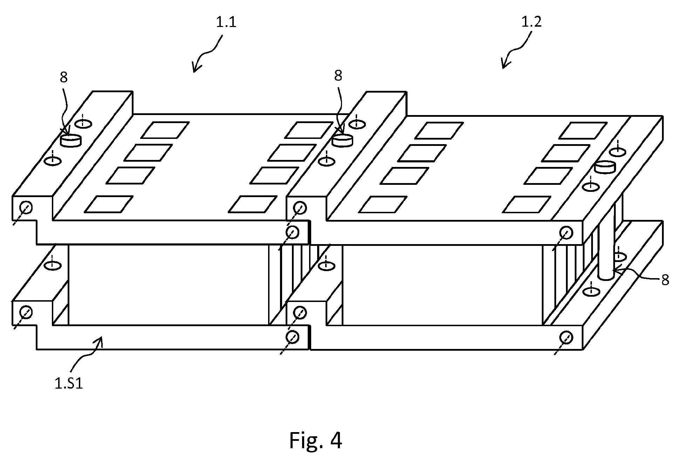

Fig. 4 zeigt eine schematische Ansicht eines erfindungsgemäßen ersten Batteriemoduls 1.1 und eines zweiten Batteriemoduls 1.2. Die beiden Batteriemodule 1.1, 1.2 sind so zueinander ausgerichtet, dass die erste Stirnseite 1.S1 beider Batteriemodule 1.1, 1.2 in die gleiche Richtung weisen und eine gemeinsame

Ebene bilden. Das zweite Batteriemodul 1.2 ist erfindungsgemäß so angeordnet, dass der erste Absatz 2.1 des zweiten Batteriemoduls 1.2 oberhalb des ersten Abschnittes 2.2 des ersten Batteriemoduls 1.1 zu liegen kommt. In gleicher Weise kommt der dritte Absatz 5.3 des zweiten Batteriemoduls 1.2 oberhalb des zweiten Abschnittes 5.4 des ersten Batteriemoduls 1.1 zu liegen. Dergestalt können erstes und zweites Batteriemodul 1.1, 1.2 besonders eng aneinander angeordnet werden, sodass die Abmessungen des gesamten Batteriesystems gering sind. In dieser Anordnung der beiden Batteriemodule 1.1, 1.2 sind die zweiten Durchgangslöcher 3.2D im ersten Abschnitt 2.2 des ersten Batteriemoduls 1.1 deckungsgleich mit den zweiten Gewindebohrungen 3.2G im ersten Absatz 2.1 des zweiten Batteriemoduls. Die Schrauben 8 verbinden die Deckkappen 5 mit den zugeordneten Grundplatten 2, wobei die Schrauben 8 durch die Durchgangslöcher 5.1 in der Deckkappe 5 geführt sind und in die Verbindungs-Gewindebohrungen 3.V in der Grundplatte 2 eingreifen.

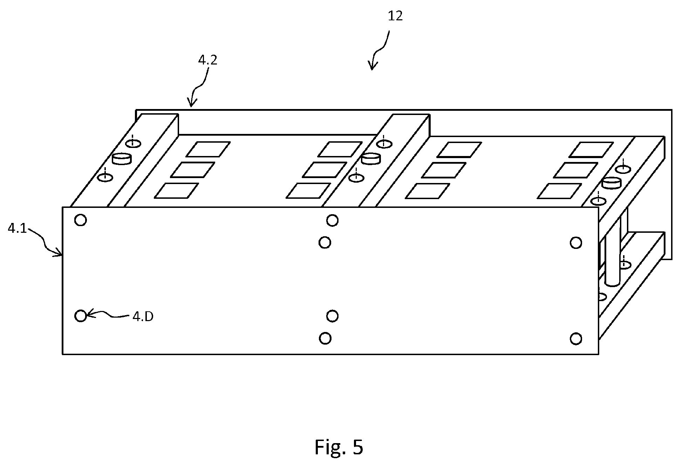

Fig. 5 zeigt eine schematische Ansicht des ersten und zweiten Batteriemoduls 1.1, 1.2 mit einem ersten Hilfsrahmen 4.1 und einem zweiten Hilfsrahmen 4.2. Der erste Hilfsrahmen 4.1 ist entlang der ersten Stirnseite 1.S1 der ersten und zweiten Batteriemodule 1.1, 1.2 angeordnet und weist Durchgangslöcher 4.D auf. Entlang der zweiten Stirnseite 1.S2 ist ein zweiter Hilfsrahmen 4.2 angeordnet, der ebenfalls Durchgangslöcher 4.D aufweist. Die Durchgangslöcher 4.D in den Hilfsrahmen 4.1, 4.2 sind deckungsgleich mit den ersten Gewindebohrungen 3.1 und den dritten Gewindebohrungen 3.3, wenn die Batteriemodule 1.1, 1.2 entlang den ersten und dritten Absätze 2.1, 5.3 und ersten und zweiten Abschnitten 2.2, 5.4 wie in Fig. 4 dargestellt angeordnet sind. Durch Schrauben durch die Durchgangslöcher 4.D in den Hilfsrahmen 4.1, 4.2 in die ersten und dritten Gewindebohrungen 3.1, 3.3 werden die Batteriemodule 1.1, 1.2 miteinander über die Hilfsrahmen 4.1, 4.2 verbunden, wodurch ein Verbund 12 gebildet wird. Die Schrauben sind der Übersichtlichkeit halber nicht dargestellt.

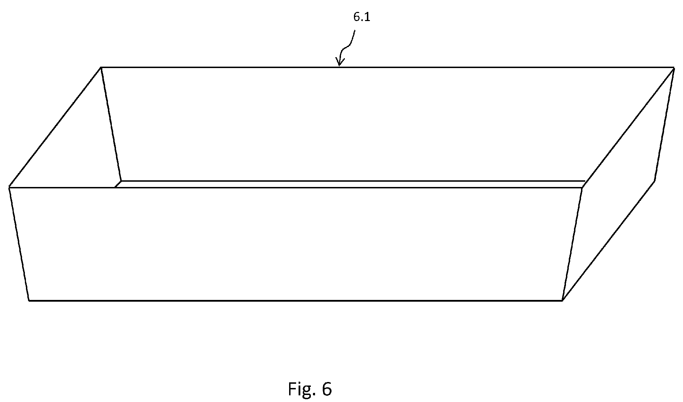

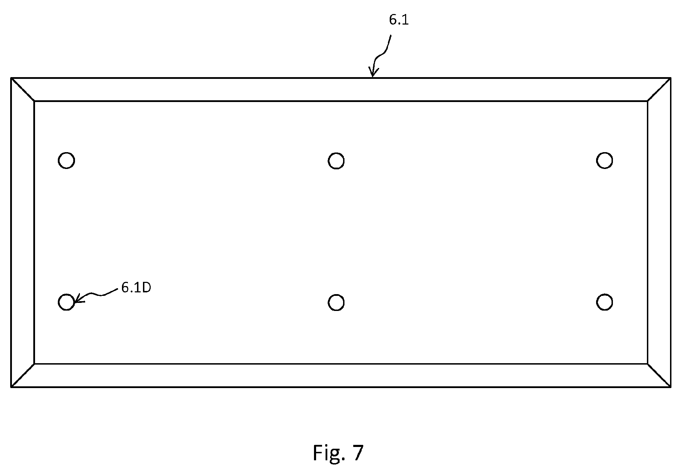

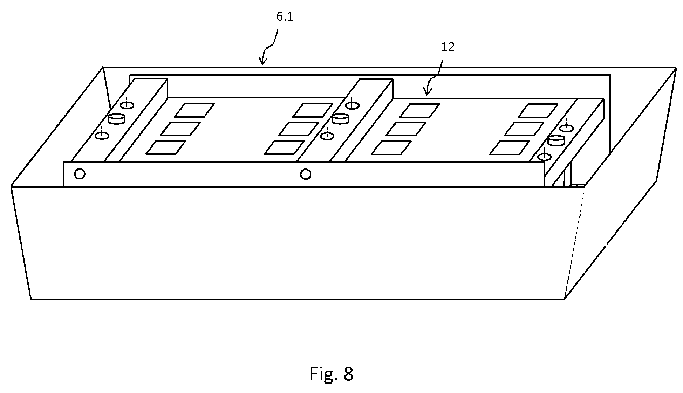

Fig. 6 zeigt eine schematische Ansicht einer Gehäuseschale 6.1, während Fig. 7 eine schematische Draufsicht auf die Gehäuseschale 6.1 darstellt. Der Boden der Gehäuseschale 6.1 weist Durchgangslöcher 6.1D auf. Die Durchgangslöcher 6.1D sind so angeordnet, dass sie mit den zweiten Durchgangslöchern 3.2D, wie sie im Verbund 12 angeordnet sind, deckungsgleich sind. Durch Verschraubung durch die Durchgangslöcher 6.1D und durch die zweiten Durchgangslöcher 3.2D in die zweiten Gewindebohrungen 3.2G wird der Verbund 12 in der Gehäuseschale 6.1 befestigt. Der so gebildete Zusammenbau ist in Fig. 8 dargestellt. Die dazu verwendeten Schrauben sind der Übersichtlichkeit halber nicht dargestellt.

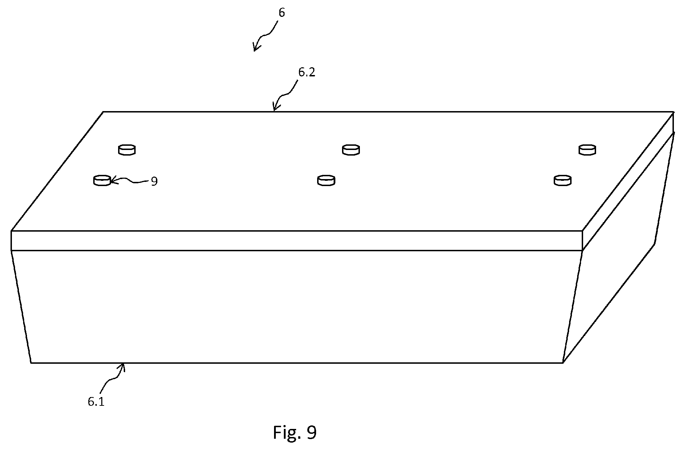

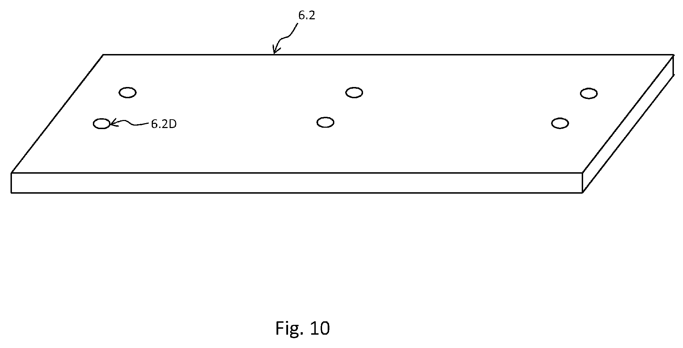

Fig. 9 zeigt eine schematische Ansicht eines Gehäuses, bestehend aus der Gehäuseschale 6.1 und einem darauf aufgesetzten Gehäusedeckel 6.2. In Fig. 10 ist der Gehäusedeckel 6.2 separat dargestellt. Der Gehäusedeckel 6.2 weist Durchgangslöcher 6.2D auf, die deckungsgleich mit den vierten Durchgangslöchern 3.4D und vierten Gewindebohrungen 3.4G des Verbunds 12 angeordnet sind. Durch Schrauben 9 durch die Durchgangslöcher 6.2D und durch die vierten Durchgangslöcher 3.4D in die vierten Gewindebohrungen 3.4G wird der Verbund 12 mit dem Gehäusedeckel 6.2 verbunden. Derart wird eine besonders steife Anbindung des Verbunds 12 im Gehäuse 6 gebildet.

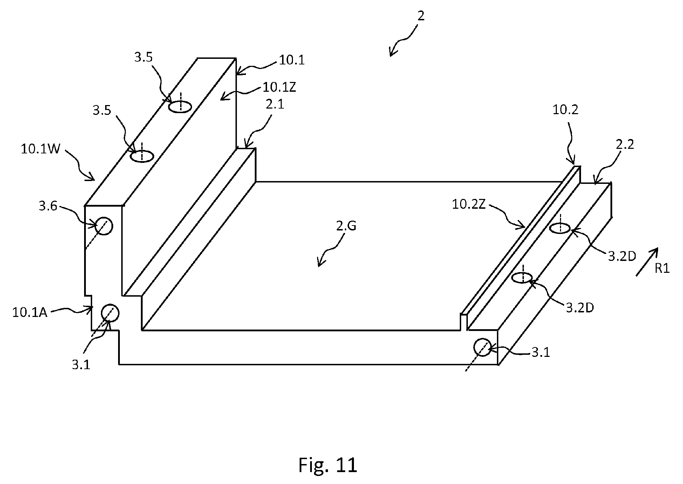

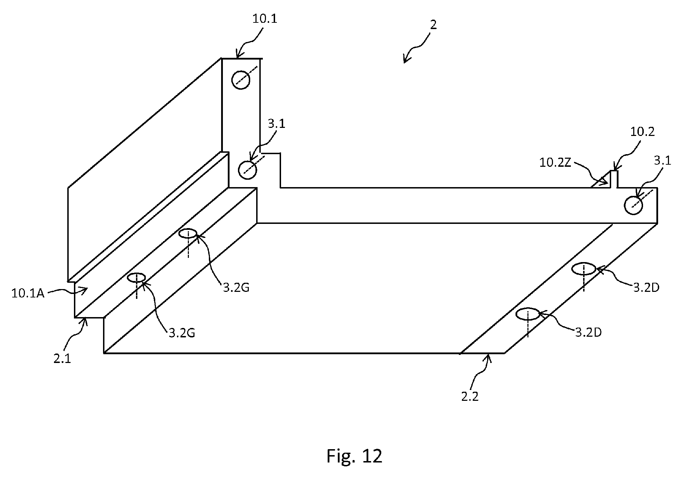

Fig. 11 und Fig. 12 zeigen schematische Ansichten einer zweiten Ausführungsform der Grundplatte 2. In dieser Ausführungsform weist die Grundplatte 2 einen ersten Steg 10.1 auf, der sich vom ersten Absatz 2.1 vertikal zur Grundfläche 2.G der Grundplatte 2 erstreckt. Der erste Steg weist fünfte Gewindebohrungen 3.5 auf, deren Achsen parallel zur Erstreckungsrichtung des ersten Stegs 10.1 angeordnet sind. Durch Durchgangslöcher 6.2D im Gehäusedeckel 6.2 können Schrauben eingeführt werden, die in die fünften Gewindebohrungen 3.5 eingreifen. Weiters weist der erste Steg 10.1 zumindest eine sechste Gewindebohrung 3.6 auf, deren Achse sich parallel zur Erstreckungsrichtung R1 erstreckt. Die der Grundfläche 2.G, und damit dem Zellenstapel 7 zugewandten Seite 10.1 des ersten Stegs 10.1 ist bevorzugt mit einer elektrisch isolierende Beschichtung versehen. Ebenso ist die der Grundfläche 2.G, und damit dem Zellenstapel 7 abgewandte Seite 10.1 W des ersten Stegs 10.1 mit einer elektrisch isolierenden Beschichtung versehen. Die der Grundfläche abgewandten Seite 10.1 W des ersten Stegs 10.1 weist eine Ausnehmung 10.1A auf. Die Ausnehmung 10.1A kann auch in Bereiche des ersten Absatzes 2.1 hineinragen.

Die Grundplatte 2 weist in dieser zweiten Ausführungsform zudem einen zweiten Steg 10.2 auf, der sich vertikal zur Grundfläche 2.G der Grundplatte 2 erstreckt. Der zweite Steg 10.2 weist eine geringere Breite und eine geringere Höhe als der erste Steg 10.1 auf. Der zweite Steg 10.2 ist so ausgebildet, dass er bei einer Anordnung in der das erste Batteriemodul 1.1 entlang dessen erstem Abschnitt 2.2 an ein zweites Batteriemodul 1.2 entlang dessen erstem Absatz 2.1 ausgerichtet ist, in die Ausnehmung 10.1A des ersten Stegs 10.1 passt. Die der Grundfläche 2.G, und damit dem Zellenstapel 7 zugewandten Seite 10.2Z des zweiten Stegs 10.2 ist mit einer elektrisch isolierenden Beschichtung versehen.

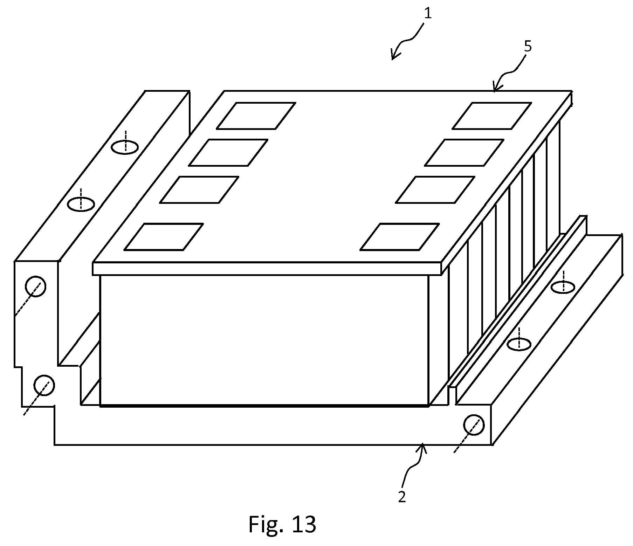

Fig. 13 zeigt eine schematische Ansicht eines Batteriemoduls 1 mit der zweiten Ausführungsform der Grundplatte 2 und der Deckkappe 5. In dieser Ausführungsform dient die Deckkappe 5 lediglich zum Halten von nicht dargestellten Zellverbindern, Zellspannungsabgriffe, Messleitungen oder Temperatursensoren. Daher kann sie deutlich dünner, und damit auch leichter ausgeführt werden. Der dritte Absatz 5.3 und der zweite Abschnitt 5.4, sowie die dem dritten Absatz 5.3 und dem zweiten Abschnitt 5.1 zugeordneten Gewindebohrungen und Durchgangslöcher 3.3, 3.4G, 3.4D entfallen in dieser Ausführungsform.

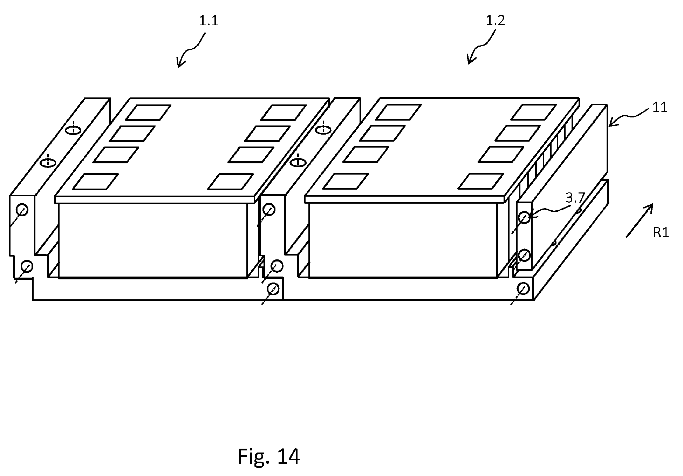

Fig. 14 zeigt eine erfindungsgemäße schematische Ansicht des ersten Batteriemoduls 1.1 und des zweiten Batteriemoduls 1.2 mit der zweiten Ausführungsform der Grundplatte 2 und einem Zusatzelement 11. Das erste Batteriemodul 1.1 ist entlang dessen erstem Abschnitt 2.2 an dem zweiten Batteriemodul 1.2 angeordnet. Da entlang dem ersten Abschnitt 2.2 des zweiten Batteriemoduls 1.2 kein weiteres Batteriemodul mehr angeordnet ist, ist überhalb des ersten Abschnittes 2.2 des zweiten Batteriemoduls 1.2 das Zusatzelement 11 angeordnet. Das Zusatzelement 11 weist siebte Gewindebohrungen 3.7 auf, deren Achsen sich entlang der Erstreckungsrichtung R1 erstrecken.

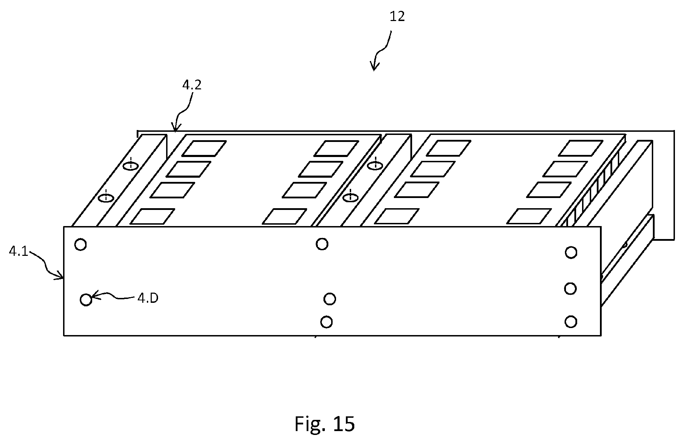

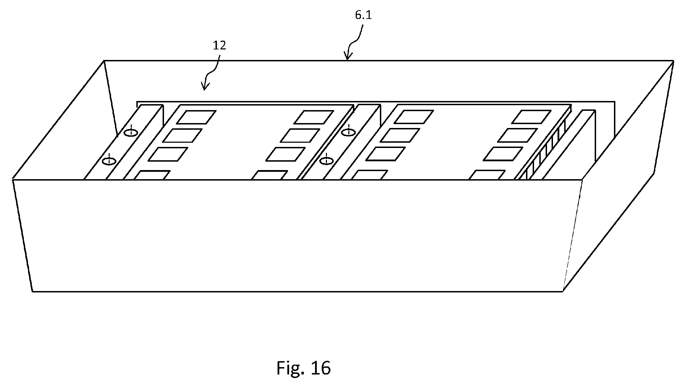

Fig. 15 zeigt eine schematische Ansicht des Verbunds 12 zweier Batteriemodule 1 und den Hilfsrahmen 4.1 und 4.2. In den Hilfsrahmen 4.1 und 4.2 sind Durchgangslöcher 4.D angeordnet, durch die nicht dargestellte Schrauben in die ersten Gewindebohrungen 3.1, in die sechsten Gewindebohrungen 3.6 und in die siebten Gewindebohrungen 3.7 geführt werden. Dadurch werden die Batteriemodule 1 über die Hilfsrahmen 4.1, 4.2 miteinander fest verbunden. Fig. 16 zeigt den so gebildeten Verbund 12, wie er in der Gehäuseschale 6.1 angeordnet ist.

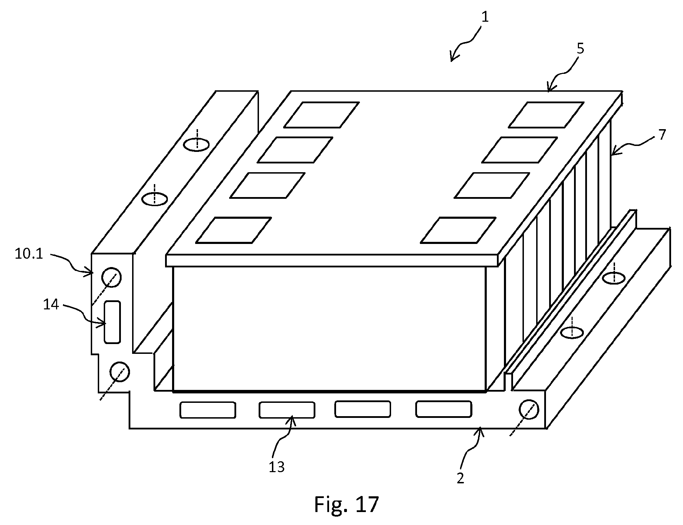

Fig. 17 zeigt eine Ansicht des Batteriemoduls 1 mit Deckkappe 5. In der Grundplatte 2 sind Kühlkanäle 13 angeordnet, durch die ein Fluid geleitet werden kann. Ist der Zellenstapel 7 gut wärmeleitend mit der Grundplatte 2 verbunden, so kann Abwärme der Zellen des Zellenstapels 7 durch das Fluid abgeführt werden. Der erste Steg 10.1 der Grundplatte 2 weist eine Aussparung 14 auf. Diese Aussparung 14 dient zur Gewichtsreduktion der Grundplatte 2. Die Grundplatte 2 wird bevorzugt im Strangpress-Verfahren hergestellt und besteht aus Aluminium.

### Bezugszeichenliste

- 1: Batteriemodul
- 1.S1: Erste Stirnseite des Batteriemoduls
- 1.S2: Zweite Stirnseite des Batteriemoduls
- 1.1: Erstes Batteriemodul
- 1.2: Zweites Batteriemodul
- 2: Grundplatte
- 2.1: Erster Absatz
- 2.1U: Unterkante erster Absatz
- 2.2: Erster Abschnitt
- 2.20: Oberkante erster Abschnitt
- 2.G: Grundfläche
- 3.1: Erste Gewindebohrungen
- 3.1A: Achsrichtung der ersten Gewindebohrungen
- 3.2G: Zweite Gewindebohrungen
- 3.2D: Zweite Durchgangslöcher
- 3.2A: Achsrichtung der zweiten Gewindebohrungen
- 3.V: Verbindungs-Gewindebohrungen
- 3.3: Dritte Gewindebohrungen
- 3.4G: Vierte Gewindebohrungen
- 3.4D: Vierte Durchgangslöcher
- 3.5: Fünfte Gewindebohrungen
- 3.6: Sechste Gewindebohrungen
- 3.7: Siebte Gewindebohrungen
- 4: Hilfsrahmen
- 4.1: Erster Hilfsrahmen
- 4.2: Zweiter Hilfsrahmen
- 4.D: Durchgangslöcher im Hilfsrahmen
- 5: Deckkappe
- 5.1: Durchgangslöcher in der Deckkappe
- 5.3: Dritter Absatz
- 5.3U: Unterkante dritter Absatz
- 5.4: Zweiter Abschnitt
- 5.4O: Oberkante zweiter Abschnitt
- 6: Gehäuse
- 6.1: Gehäuseschale
- 6.1D: Durchgangslöcher in der Gehäuseschale
- 6.2: Gehäusedeckel
- 6.2D: Durchgangslöcher im Gehäusedeckel
- 7: Zellenstapel
- 8: Schraube
- 9: Schraube
- 10.1: Erster Steg
- 10.1Z: Dem Zellenstapel zugewandte Seite des ersten Stegs
- 10.1W: Dem Zellenstapel abgewandte Seite des ersten Stegs
- 10.1A: Ausnehmung
- 10.2: Zweiter Steg
- 10.2Z: Dem Zellenstapel zugewandte Seite des zweiten Stegs
- 11: Zusatzelement
- 12: Verbund
- 13: Kühlkanal
- 14: Aussparung

- R1: Erstreckungsrichtung des ersten Absatzes und des ersten Abschnitts
- R2: Erstreckungsrichtung des dritten Absatzes und des zweiten Abschnitts

## Patentansprüche

1. Batteriesystem, umfassend zumindest ein erstes und ein zweites Batteriemodul (1.1, 1.2), wobei jedes Batteriemodul (1.1, 1.2) durch eine Grundplatte (2) und einen auf einer Grundfläche (2.G) der Grundplatte (2) befestigten Zellenstapel (7) gebildet ist, und zumindest einen Hilfsrahmen (4), wobei an einer ersten Seite der Grundplatte (2) ein erster Absatz (2.1) und an einer der ersten Seite gegenüberliegenden zweiten Seite ein erster Abschnitt (2.2) angeordnet ist, wobei im ersten Absatz (2.1) und im ersten Abschnitt (2.2) parallel zur Erstreckungsrichtung R1 des ersten Absatzes (2.1) und des ersten Abschnitts (2.2) erste Gewindebohrungen (3.1) angeordnet sind, wobei die Batteriemodule (1.1, 1.2) durch Verschraubung durch im Hilfsrahmen (4) angeordnete Durchgangslöcher (4.D) in die ersten Gewindebohrungen (3.1) über den Hilfsrahmen (4) miteinander verbunden sind,
**dadurch gekennzeichnet? dass** eine Unterkante (2.1 U) des ersten Absatzes (2.1) des zweiten Batteriemoduls (1.2) in Einbaulage des Batteriesystems oberhalb einer Oberkante (2.20) des ersten Abschnittes (2.2) des ersten Batteriemoduls (1.1) angeordnet ist.

2. Batteriesystem nach Anspruch 1,
**dadurch gekennzeichnet, dass** das Batteriesystem ein Gehäuse (6) mit einer Gehäuseschale (6.1) und einem Gehäusedeckel (6.2) umfasst, wobei im ersten Absatz (2.1) zweite Gewindebohrungen (3.2G) vertikal zur Grundfläche (2.G) und im ersten Abschnitt (2.2) zweite Durchgangslöcher (3.2D) vertikal zur Grundfläche (2. G) angeordnet sind, wobei die Batteriemodule (1.1, 1.2) durch Verschraubung durch Durchgangslöcher (6.1D) in der Gehäuseschale (6.1) und durch die zweiten Durchgangslöcher (3.2D) im ersten Abschnitt (2.2) in die zweiten Gewindebohrungen (3.2G) im ersten Absatz (2.1) mit der Gehäuseschale (6.1) verbunden sind.

3. Batteriesystem nach einem der Ansprüche 1 bis 2,
**dadurch gekennzeichnet, dass** jedes Batteriemodul (1) eine Deckkappe (5) aufweist, wobei an einer ersten Seite der Deckkappe (5) ein dritter Absatz (5.3) und an einer der ersten Seite der Deckkappe (5) gegenüberliegenden zweiten Seite ein zweiter Abschnitt (5.4) angeordnet ist.

4. Batteriesystem nach Anspruch 3,
**dadurch gekennzeichnet, dass** im dritten Absatz (5.3) und im zweiten Abschnitt (5.4) parallel zur Erstreckungsrichtung (R2) des dritten Absatzes und des zweiten Abschnitts (5.3, 5.4) dritte Gewindebohrungen (3.3) angeordnet sind, wobei die Batteriemodule (1) durch Verschraubung durch im Hilfsrahmen (4) angeordnete Durchgangslöcher (4.D) in die dritten Gewindebohrungen (3.3) über den Hilfsrahmen (4) miteinander verbunden sind.

5. Batteriesystem nach einem der Ansprüche 3 bis 4,
**dadurch gekennzeichnet, dass** eine Unterkante (5.3U) des dritten Absatzes (5.3) des zweiten Batteriemoduls (1.2) in Einbaulage des Batteriesystems oberhalb einer Oberkante (5.40) des zweiten Abschnittes (5.4) des ersten Batteriemoduls (1.1) angeordnet ist.

6. Batteriesystem nach einem der Ansprüche 3 bis 5,
**dadurch gekennzeichnet, dass** der dritte Absatz (5.3) vierte Durchgangslöcher (3.4D) und der zweite Abschnitt (5.4) vierte Gewindebohrungen (3.4G) aufweist.

7. Batteriesystem nach einem der Ansprüche 1 bis 6,
**dadurch gekennzeichnet, dass** die Grundplatte (2) jedes Batteriemoduls (1) einen ersten Steg (10.1) aufweist, der sich vom ersten Absatz (2.1) vertikal zur Grundfläche (2.G) der Grundplatte (2) erstreckt.

8. Batteriesystem nach Anspruch 7,
**dadurch gekennzeichnet, dass** der erste Steg (10.1) fünfte Gewindebohrungen (3.5) parallel zur Erstreckungsrichtung des ersten Stegs (10.1) aufweist, wobei die Batteriemodule (1) durch Verschraubung durch Durchgangslöcher (6.2D) des Gehäusedeckels (6.2) in die fünften Gewindebohrungen (3.5) mit dem Gehäusedeckel (6.2) verbunden sind.

9. Batteriesystem nach einem der Ansprüche 7 bis 8,
**dadurch gekennzeichnet, dass** der erste Steg (10.1) sechste Gewindebohrungen (3.6) parallel zur Erstreckungsrichtung (R1) des ersten Absatzes (2.1) und des ersten Abschnitts (2.2) aufweist, wobei die Batteriemodule (1) durch Verschraubung durch Durchgangslöcher (4.D) des Hilfsrahmens (4) in die sechsten Gewindebohrungen (3.6) über den Hilfsrahmen (4) miteinander verbunden sind.

10. Batteriesystem nach einem der Ansprüche 1 bis 9,
**dadurch gekennzeichnet, dass** die Grundplatte (2) jedes Batteriemoduls (1) einen zweiten Steg (10.2) aufweist, der sich vom ersten Abschnitt (2.2) vertikal zur Grundfläche (2.G) der Grundplatte (2) erstreckt.

11. Batteriesystem nach Anspruch 10,
**dadurch gekennzeichnet, dass** der zweite Steg (10.2) eine geringere Breite und eine geringere Höhe aufweist als der erste Steg (10.1).

12. Batteriesystem nach einem der Ansprüche 10 bis 11,
**dadurch gekennzeichnet, dass** die dem Zellenstapel (7) des Batteriemoduls (1) zugewandte Seite (10.2Z) des zweiten Stegs (10.2) mit einer elektrisch isolierenden Beschichtung versehen ist.

13. Batteriesystem nach einem der Ansprüche 7 bis 12,
**dadurch gekennzeichnet, dass** die dem Zellenstapel (7) des Batteriemoduls (1) zugewandte Seite (10.1Z) des ersten Stegs (10.1) mit einer elektrisch isolierenden Beschichtung versehen ist.

14. Batteriesystem nach einem der Ansprüche 7 bis 13,
**dadurch gekennzeichnet, dass** die dem Zellenstapel (7) des Batteriemoduls (1) abgewandte Seite (10.1W) des ersten Stegs (10.1) eine Ausnehmung (10.1A) aufweist.

15. Batteriesystem nach Anspruch 14,
**dadurch gekennzeichnet, dass** die Ausnehmung (10.1A) des zweiten Batteriemoduls (1.2) zur Aufnahme des zweiten Stegs (10.2) des ersten Batteriemoduls (1.1) ausgebildet ist.

16. Batteriesystem nach einem der Ansprüche 1 bis 15,
**dadurch gekennzeichnet, dass** die Grundplatte (2) als Kühlkörper mit innenliegenden Kühlkanälen (13) ausgebildet ist.

17. Batteriesystem nach einem der Ansprüche 1 bis 16,
**dadurch gekennzeichnet, dass** die Grundplatte (2) im Aluminium-Strangpress-Verfahren hergestellt ist.

18. Batteriesystem nach einem der Ansprüche 1 bis 17,
**dadurch gekennzeichnet, dass** der Zellenstapel (7) jedes Batteriemoduls (1) mit der Grundfläche (2.G) der dem Zellenstapel (7) zugeordneten Grundplatte (2) verklebt ist.

19. Batteriesystem nach einem der Ansprüche 1 bis 18,
**dadurch gekennzeichnet, dass** ein erster Hilfsrahmen (4.1) an einer ersten Stirnseite (1.S1) der Batteriemodule (1) angeordnet ist, und ein zweiter Hilfsrahmen (4.2) an einer zweiten, der ersten Stirnseite (1.S1) gegenüberliegenden Stirnseite (1.S2) der Batteriemodule (1) angeordnet ist.

20. Batteriesystem nach einem der Ansprüche 1 bis 19,
**dadurch gekennzeichnet, dass** ein Batteriemodul (1), entlang dessen erstem Abschnitt (2.2) kein anderes Batteriemodul (1) angeordnet ist, ein Zusatzelement (11) umfasst, wobei das Zusatzelement siebte Gewindebohrungen (3.7) umfasst.

21. Batteriesystem nach Anspruch 20,
**dadurch gekennzeichnet, dass** das Zusatzelement (11) mit dem ersten Hilfsrahmen (4.1) und dem zweiten Hilfsrahmen (4.2) verschraubt ist.

## Claims

1. Battery system, comprising at least one first and one second battery module (1.1, 1.2), wherein every battery module (1.1, 1.2) is formed by a base plate (2) and a cell stack (7) fixed on a base surface (2.G) of the base plate (2), and at least one auxiliary frame (4), wherein a first shoulder (2.1) is arranged on a first side of the base plate (2) and a first section (2.2) is arranged on a second side opposed to the first side, wherein first threaded bores (3.1) are arranged in the first shoulder (2.1) and in the first section (2.2) parallel to the extension direction R1 of the first shoulder (2.1) and the first section (2.2), wherein the battery modules (1.1, 1.2) are connected to each other via the auxiliary frame (4) by a screw connection through via holes (4.D) arranged in the auxiliary frame (4) into the first threaded bores (3.1),
**characterized in that** a lower edge (2.1U) of the first shoulder (2.1) of the second battery module (1.2) is arranged in installation position of the battery system above an upper edge (2.20) of the first section (2.2) of the first battery module (1.1).

2. Battery system according to claim 1,
**characterized in that** the battery system comprises a housing (6) with a housing shell (6.1) and a housing cover (6.2), wherein second threaded bores (3.2G) are arranged in the first shoulder (2.1) vertically with respect to the base surface (2.G) and second via holes (3.2D) are arranged in the first section (2.2) vertically with respect to the base surface (2.G), wherein the battery modules (1.1, 1.2) are connected to the housing shell (6.1) by a screw connection through via holes (6.1D) in the housing shell (6.1) and through the second via holes (3.2D) in the first section (2.2) into the second threaded bores (3.2G) in the first shoulder (2.1).

3. Battery system according to any of claims 1 to 2,
**characterized in that** every battery module (1) comprises a cover cap (5), wherein a third shoulder (5.3) is arranged on a first side of the cover cap (5) and a second section (5.4) is arranged on a second side opposite the first side of the cover cap (5).

4. Battery system according to claim 3,
**characterized in that** third threaded bores (3.3) are arranged in the third shoulder (5.3) and in the second section (5.4) parallel to the extension direction (R2) of the third shoulder and the second section (5.3, 5.4), wherein the battery modules (1) are connected to each other via the auxiliary frame (4) by a screw connection through via holes (4.D) arranged in the auxiliary frame (4) into the third threaded bores (3.3).

5. Battery system according to any of claims 3 to 4,
**characterized in that** a lower edge (5.3U) of the third shoulder (5.3) of the second battery module (1.2) is arranged in installation position of the battery system above an upper edge (5.40) of the second section (5.4) of the first battery module (1.1).

6. Battery system according to any of claims 3 to 5,
**characterized in that** the third shoulder (5.3) comprises fourth via holes (3.4D) and the second section (5.4) comprises fourth threaded bores (3.4G).

7. Battery system according to any of claims 1 to 6,
**characterized in that** the base plate (2) of every battery module (1) comprises a first bar (10.1) extending vertically from the first shoulder (2.1) to the base surface (2.G) of the base plate (2).

8. Battery system according to claim 7,
**characterized in that** the first bar (10.1) comprises fifth threaded bores (3.5) parallel to the extension direction of the first bar (10.1), wherein the battery modules (1) are connected to the housing cover (6.2) by a screw connection through via holes (6.2D) of the housing cover (6.2) into the fifth threaded bores (3.5).

9. Battery system according to any of claims 7 to 8,
**characterized in that** the first bar (10.1) comprises sixth threaded bores (3.6) parallel to the extension direction (R1) of the first shoulder (2.1) and the first section (2.2), wherein the battery modules (1) are connected to each other via the auxiliary frame (4) by a screw connection through via holes (4.D) of the auxiliary frame (4) into the sixth threaded bores (3.6).

10. Battery system according to any of claims 1 to 9,
**characterized in that** the base plate (2) of every battery module (1) comprises a second bar (10.2) which extends vertically from the first section (2.2) to the base surface (2.G) of the base plate (2).

11. Battery system according to claim 10,
**characterized in that** the second bar (10.2) comprises a smaller width and a smaller height than the first bar (10.2).

12. Battery system according to any of claims 10 to 11,
**characterized in that** the side (10.2Z) of the second bar (10.2) facing the cell stack (7) of the battery module (1) is provided with an electrically insulating coating.

13. Battery system according to any of claims 7 to12,
**characterized in that** the side (10.1Z) of the first bar (10.1) facing the cell stack (7) of the battery module (1) is provided with an electrically insulating coating.

14. Battery system according to any of claims 7 to 13,
**characterized in that** the side (10.1W) of the first bar (10.1) facing away from the cell stack (7) of the battery module (1) comprises a recess (10.1A).

15. Battery system according to claim 14,
**characterized in that** the recess (10.1A) of the second battery module (1.2) is formed for accommodating the second bar (10.2) of the first battery module (1.1).

16. Battery system according to any of claims 1 to 15,
**characterized in that** the base plate (2) is formed as a cooling body with internal cooling channels (13).

17. Battery system according to any of claims 1 to 16,
**characterized in that** the base plate (2) is fabricated by an aluminum extrusion method.

18. Battery system according to any of claims 1 to 17,
**characterized in that** the cell stack (7) of every battery module (1) is adhered to the base surface (2.G) of the base plate (2) associated with the cell stack (7).

19. Battery system according to any of claims 1 to 18,
**characterized in that** a first auxiliary frame (4.1) is arranged on a first face side (1.S1) of the battery modules (1) and that a second auxiliary frame (4.2) is arranged on a second face side (1.S2) of the battery modules (1) opposite the first face side (1.S1).

20. Battery system according to any of claims 1 to 19,
**characterized in that** a battery module (1) along whose first section (2.2) no other battery module (1) is arranged comprises an additional element (11), wherein the additional element comprises seventh threaded bores (3.7).

21. Battery system according to claim 20,
**characterized in that** the additional element (11) is screwed to the first auxiliary frame (4.1) and the second auxiliary frame (4.2).

## Revendications

1. Système de batterie, comprenant au moins un premier et un deuxième module de batterie (1.1, 1.2), chaque module de batterie (1.1, 1.2) étant formé d'une plaque de base (2) et d'une pile de cellules (7) fixée sur une surface de base (2.G) de la plaque de base (2), et au moins un châssis auxiliaire (4), un premier épaulement (2.1) étant disposé contre un premier côté de la plaque de base (2) et un premier segment (2.2) étant disposé contre un deuxième côté opposé au premier côté, de premiers alésages filetés (3.1) étant ménagés dans le premier épaulement (2.1) et dans le premier segment (2.2) parallèlement à la direction d'extension RI du premier épaulement (2.1) et du premier segment (2.2), les modules de batterie (1.1, 1.2) étant assemblés l'un à l'autre au moyen du châssis auxiliaire (4) par vissage au travers de trous débouchants (4.D) ménagés dans le châssis auxiliaire (4) vers les premiers alésages filetés (3.1),
**caractérisé en ce qu'**en position de montage du système de batterie, un bord inférieur (2.1U) du premier épaulement (2.1) du deuxième module de batterie (1.2) est disposé au-dessus d'un bord supérieur (2.20) du premier segment (2.2) du premier module de batterie (1.1).

2. Système de batterie selon la revendication 1, ledit système de batterie étant **caractérisé en ce qu'**il comprend un boîtier (6) avec une coque de boîtier (6.1) et un couvercle de boîtier (6.2), de seconds alésages filetés (3.2G) étant ménagés verticalement à la surface de base (2.G) dans le premier épaulement (2.1) et de seconds trous débouchants (3.2D) étant ménagés verticalement à la surface de base (2.G) dans le premier segment (2.2), les modules de batterie (1.1, 1.2) étant assemblés à la coque de boîtier (6.1) par vissage au travers de trous débouchants (6.1D) de la coque de boîtier (6.1) et au travers des deuxième trous débouchants (3.2D) du premier segment (2.2) vers les deuxièmes alésages filetés (3.2G) dans le premier épaulement (2.1).

3. Système de batterie selon l'une des revendications 1 à 2, **caractérisé en ce que** chaque module de batterie (1) comporte un cache supérieur (5), un troisième épaulement (5.3) étant disposé sur un premier côté du cache supérieur (5) et un deuxième segment (5.4) étant disposé sur un deuxième côté opposé au premier côté du cache supérieur (5).

4. Système de batterie selon la revendication 3, **caractérisé en ce que** de troisièmes alésages filetés (3.3) sont ménagés dans le troisième épaulement (5.3) et dans le deuxième segment (5.4) parallèlement à la direction d'extension (R2) du troisième épaulement et du deuxième segment (5.3, 5.4), les modules de batterie (1) étant assemblés l'un à l'autre au moyen du châssis auxiliaire (4) par vissage au travers de trous débouchants (4.D) ménagés dans le châssis auxiliaire (4) vers les troisièmes alésages filetés (3.3).

5. Système de batterie selon l'une des revendications 3 et 4, **caractérisé en ce qu'**en position de montage du système de batterie, un bord inférieur (5.3U) du troisième épaulement (5.3) du deuxième module de batterie (1.2) est disposé au-dessus d'un bord supérieur (5.40) du deuxième segment (5.4) du premier module de batterie (1.1).

6. Système de batterie selon l'une des revendications 3 à 5, **caractérisé en ce que** le troisième épaulement (5.3) présente des quatrièmes trous débouchants (3.4D) et le deuxième segment (5.4) présente des quatrièmes alésages filetés (3.4G).

7. Système de batterie selon l'une des revendications 1 à 6, **caractérisé en ce que** la plaque de base (2) de chaque module de batterie (1) comporte une première traverse (10.1) qui s'étend depuis le premier épaulement (2.1) verticalement à la surface de base (2.G) de la plaque de base (2).

8. Système de batterie selon la revendication 7, **caractérisé en ce que** la première traverse (10.1) présente des cinquièmes alésages filetés (3.5) parallèlement à la direction d'extension de la première traverse (10.1), les modules de batterie (1) étant assemblés au couvercle de boîtier (6.2) par vissage au travers des trous débouchants (6.2D) du couvercle de boîtier (6.2) vers les cinquièmes alésages filetés (3.5).

9. Système de batterie selon l'une des revendications 7 à 8, **caractérisé en ce que** la première traverse (10.1) présente des sixièmes alésages filetés (3.6) parallèlement à la direction d'extension (R1) du premier épaulement (2.1) et du premier segment (2.2), les modules de batterie (1) étant assemblés l'un à l'autre au moyen du châssis auxiliaire (4) par vissage au travers des trous débouchants (4.D) du châssis auxiliaire (4) vers les sixièmes alésages filetés (3.6).

10. Système de batterie selon l'une des revendications 1 à 9, **caractérisé en ce que** la plaque de base (2) de chaque module de batterie (1) comporte une deuxième traverse (10.2) qui s'étend depuis le premier segment (2.2) verticalement à la surface de base (2.G) de la plaque de base (2).

11. Système de batterie selon la revendication 10, **caractérisé en ce que** la deuxième traverse (10.2) a une largeur et une hauteur inférieures à celles de la première traverse (10.1).

12. Système de batterie selon l'une des revendications 10 et 11, **caractérisé en ce que** le côté (10.2Z) de la deuxième traverse (10.2) opposé à la pile de cellules (7) du module de batterie (1) est pourvu d'un revêtement électriquement isolant.

13. Système de batterie selon l'une des revendications 7 à 12, **caractérisé en ce que** le côté (10.1Z) de la première traverse (10.1) opposé à la pile de cellules (7) du module de batterie (1) est pourvu d'un revêtement électriquement isolant.

14. Système de batterie selon l'une des revendications 7 à 13, **caractérisé en ce que** le côté (10.1W) de la première traverse (10.1) distant de la pile de cellules (7) du module de batterie (1) présente un retrait (10.1A).

15. Système de batterie selon la revendication 14, **caractérisé en ce que** le retrait (10.1A) du deuxième module de batterie (1.2) est prévu pour recevoir la deuxième traverse (10.2) du premier module de batterie (1.1).

16. Système de batterie selon l'une des revendications 1 à 15, **caractérisé en ce que** la plaque de base (2) est réalisée comme corps de refroidissement à canaux de refroidissement intérieurs (13).

17. Système de batterie selon l'une des revendications 1 à 16, **caractérisé en ce que** la plaque de base (2) est fabriquée par procédé d'extrusion d'aluminium à la presse.

18. Système de batterie selon l'une des revendications 1 à 17, **caractérisé en ce que** la pile de cellules (7) de chaque module de batterie (1) est collée à la surface de base (2.G) de la plaque de base (2) associée à la pile de cellules (7).

19. Système de batterie selon l'une des revendications 1 à 18, **caractérisé en ce qu'**un premier châssis auxiliaire (4.1) est disposé contre une première face frontale (1.S1) des modules de batterie (1), et un deuxième châssis auxiliaire (4.2) est disposé contre une deuxième face frontale (1.S2) des modules de batterie (1) opposée à la première face frontale (1.S1).

20. Système de batterie selon l'une des revendications 1 à 19, **caractérisé en ce qu'**un module de batterie (1), le long du premier segment (2.2) duquel aucun autre module de batterie (1) n'est disposé, comprend un élément additionnel (11), ledit élément additionnel présentant des septièmes alésages filetés (3.7).

21. Système de batterie selon la revendication 20, **caractérisé en ce que** l'élément additionnel (11) est vissé au premier châssis auxiliaire (4.1) et au deuxième châssis auxiliaire (4.2).
